# EUROPÄISCHE PATENTSCHRIFT

(11) **EP 1 773 637 B1**
(45) Veröffentlichungstag und Bekanntmachung des Hinweises auf die Patenterteilung: **16.04.2008**
(21) Anmeldenummer: 05767866.6
(22) Anmeldetag: 03.08.2005
(51) Int. Cl.: B60T 13/74, F16D 65/14, F16D 65/36

(54) **SICHERHEITSBREMSE**
SAFETY BRAKE
FREIN DE SECURITE

(30) Priorität: 04.08.2004 DE 102004038022
(43) Veröffentlichungstag der Anmeldung: 18.04.2007
(73) Patentinhaber: Ortlinghaus-Werke GmbH, 42929 Wermelskirchen (DE)
(72) Erfinder: SEEGER, Herbert, 32547 Bad Oeynhausen (DE); MELLER, Udo, 42929 Wermelskirchen (DE)
(74) Vertreter: Füssel, Michael
(86) Internationale Anmeldenummer: PCT/EP2005/008417
(87) Internationale Veröffentlichungsnummer: WO 2006/015786

(56) Entgegenhaltungen:
- EP-A- 0 891 908
- DE-A1- 4 000 835
- DE-A1- 10 135 029
- DE-B- 1 268 342
- US-A- 5 645 143

## Beschreibung

Die vorliegende Erfindung betrifft eine Sicherheitsbremse nach Oberbegriff des Hauptanspruchs.

Eine Sicherheitsbremse dieser Gattung ist aus dem Dokument DE 101 35 029 bekannt.

Derartige Sicherheitsbremsen dienen im Maschinenbau zum Abbremsen bekannter Lasten bis zum Stillstand. Im Falle des einsetzenden Bremsvorgangs muß die abzubremsende und noch bewegte Last zwingend bis zum Stillstand kommen, da ansonsten die Sicherheitsfunktion der Sicherheitsbremse nicht erfüllt wäre.

Dabei ist dem durch äußere Kräfte aufgeprägten Lastmoment, welches aufgrund der bewegten Last besteht, das zwischen Bremsrotor und Bremsstator entstehende Bremsmoment entgegengerichtet. Das Bremsmoment führt daher kontinuierlich zur vollständigen Vernichtung der durch das Lastmoment vorgelegten kinetischen Energie. Danach befindet sich die Sicherheitsbremse in Bremssperrstellung, wobei zwischen Bremsrotor und Bremsstator dann nicht mehr Gleitreibung sondern Haftreibung besteht.

Derartige Sicherheitsbremsen sind beispielsweise bekannt als federkraftbetätigte Bremsen, die von einem Druckmittel gelüftet werden.

Dabei wirken die Federn als Kraftgeber, die von hydraulischen Komponenten sogar noch in ihrer Kraftwirkung unterstützt werden können.

Die Funktion dieser Kraftgeber wird aber in jedem Fall durch die Kolbenzylindereinheit aufgehoben, wenn beim Lüftvorgang das Druckmittel in die Kolbenzylindereinheit strömt, so daß dann die Sicherheitsbremse in ihre Bremsfreigabestellung verlagert wird.

Der über die Federkraft eingeleiteten Bremsfunktion wirkt daher das in die Kolbenzylindereinheit eingesteuerte Druckmittel entgegen, um die Sicherheitsbremse wieder zu lösen.

Alternativ zu diesen Passivbremsen können auch Aktivbremsen in Frage kommen, bei denen additiv zu oder anstelle einer Federkraftbetätigung die Bremsfunktion durch ein hydraulisches oder pneumatisches Druckmittel herbeigeführt wird.

Ohne Beschränkung der Erfindung kommen auch Bremsen in Betracht die auf dem umgekehrten Prinzip beruhen. Hierunter ist zu verstehen, daß die Bremsen durch den Kraftgeber in Bremsfreigabestellung verlagert werden, während sie durch das Druckmittel in die Bremssperrstellung beaufschlagt sind.

Für alle die oben genannten Bremsen unterschiedlicher Bauarten gelten daher die folgenden Ausführungen entsprechend.

Im folgenden wird daher, ohne Beschränkung der Erfindung hierauf, stets nur von federkraftbeaufschlagten und mit Druckmittel belüfteten Bremsen gesprochen, solange nicht ausdrücklich auf notwendige Abweichungen für Bremsen anderer Bauarten hingewiesen wird.

Derartige Sicherheitsbremsen dienen beispielsweise im Maschinenbau zum Abbremsen von Lasten zum Beispiel bei Rolltreppen, Pressen, Transferbändern oder dgl. Sie zeichnen sich dadurch aus, daß im Betriebsbereich zwischen der Bremsfreigabestellung und der Bremssperrstellung eine kontinuierliche Abnahme der Drehzahlen des Bremsrotors bis zum Stillstand erfolgt.

Während der kontinuierlichen Abnahme der Drehzahl liegt zwischen Bremsrotor und Bremsstator ausschließlich Gleitreibung an, die letztlich mit Einnahme der Bremssperrstellung in Haftreibung übergeht. Danach wird die Last so lange im Stillstand gehalten, bis die Bremse durch das Druckmittel belüftet wird.

Der Vollständigkeit halber soll gesagt sein, daß als Druckmittel sowohl hydraulische als auch pneumatische Druckmittel in Betracht kommen.

Bei derartigen federkraftbelasteten Bremsen ist das Bremsmoment praktisch durch die anstehenden Federkräfte fest vorgegeben. Dies gilt sinngemäß auch für Kraftgeber anderer Bauarten.

Die allein von der Art des Kraftgebers vorgegebene Abhängigkeit des Bremsmoments wird allerdings zum Beispiel dann als Nachteil empfunden, wenn die Bremswirkung lastabhängig erfolgen soll oder zum Beispiel verschleißbedingt nachgeführt werden muß.

Ein praktisches Anwendungsbeispiel ist bei Rolltreppen gegeben.

Eine mit nur wenigen Personen belastete Rolltreppe soll nämlich in Notsituationen nur so langsam abgebremst werden, daß die Schädigung der Fahrgäste nicht zu befürchten ist, obwohl die Sicherheitsbremse für das hohe Bremsmoment einer vollbesetzten Rolltreppe ausgelegt ist.

Darüber hinaus muß aber das hohe Bremsmoment auch dann noch erreicht werden, wenn die Federkräfte der Kraftgeber infolge eines hohen Verschleißes am Bremsbelag zur Erzielung der Bremssperrstellung weiter ausfahren müssen, als dies bei einem neuwertigen Bremsbelag der Fall wäre.

Es ist deshalb Aufgabe der vorliegenden Erfindung, die bekannte Sicherheitsbremse so weiterzubilden, daß bei geringem Bauaufwand ein hydraulisch oder pneumatisch steuerbares System von großer Feinfühligkeit entsteht.

Diese Aufgabe löst die Erfindung mit den Merkmalen des Hauptanspruchs.

Aus der Erfindung ergibt sich der Vorteil, daß die Feinfühligkeit der hydraulischen oder pneumatischen Steuerung verbessert wird.

Dieser Vorteil wird dadurch erreicht, daß das Gebersystem in zwei Kolbenzylindereinheiten aufgeteilt wird, von denen die eine Kolbenzylindereinheit allein hydraulisch oder pneumatisch angesteuert wird und zur Verlagerung der Bremsenbauteile von der Bremssperr- in die Bremsfreigabestellung und umgekehrt ausgelegt ist, während eine weitere Kolbenzylindereinheit, die ebenfalls Bestandteil des Gebersystems ist, von kleinerer Baugröße vorgesehen ist, um die Aussteuerung der Betriebsdrücke im Betriebsbereich der Sicherheitsbremse zwischen der Bremsfreigabestellung und der Bremssperrstellung zu übernehmen.

Das baukleinere System der weiteren Kolbenzylindereinheit weist dabei nicht nur die kleineren bewegten Massen auf, sondern darüber hinaus auch noch die geringeren Losbrechmomente zwischen Kolben und Zylinder, so daß nicht nur die Reaktionszeiten sondern auch die Reaktionsgeschwindigkeiten der weiteren Kolbenzylindereinheit gegenüber der hydraulisch angesteuerten Kolbenzylindereinheit regelungstechnisch feinfühliger sind.

Dieser Vorteil wird dadurch erreicht, daß die weitere Kolbenzylindereinheit zusammen mit der hydraulisch angesteuerten Kolbenzylindereinheit, die letztlich nur zur Ein- und Ausschaltung der Bremse dient, parallel an die gemeinsame Druckmittelleitung angeschlossen ist, über welche diejenige Kolbenzylindereinheit gespeist wird, die zur Verlagerung der Sicherheitsbremse zwischen Bremssperrstellung und Bremsfreigabestellung dient. '

Es sind demnach drei Kolbenzylindereinheiten vorgesehen, von denen die erste allein der Verlagerung der Sicherheitsbremse von der Bremssperr- in die Bremsfreigabestellung dient und die unmittelbar auf die Relativstellung zwischen Bremsrotor und Bremsstator Einfluß nimmt.

Die hydraulisch angesteuerte Kolbenzylindereinheit dient dabei der Einsteuerung bzw. Aussteuerung von Druckmittel in die erste Kolbenzylindereinheit. Parallel zu der hydraulisch angesteuerten Kolbenzylindereinheit liegt nun erfindungsgemäß die weitere Kolbenzylindereinheit, die einerseits mit ihrer Hydraulikseite parallel zu der hydraulisch angesteuerten Kolbenzylindereinheit ebenfalls an die Druckmittelleitung angeschlossen ist und andererseits auf ihrer von der Hydraulikseite abgewandten Seite mit einem Verlagerungsantrieb in Verbindung steht.

Dabei übernimmt der Verlagerungsantrieb die Funktion, die weitere Kolbenzylindereinheit dauerhaft in unterschiedlichen Lagen zu positionieren.

Zu diesem Zweck ist der Verlagerungsantrieb motorisch ausgeführt und beaufschlagt die weitere Kolbenzylindereinheit in dem Sinne, daß letztere dauerhaft in unterschiedlichen Lagen positioniert wird.

Wird zwischen dem Verlagerungsantrieb und der weiteren Kolbenzylindereinheit eine Druckfeder angeordnet, lassen sich auch einfache regelungstechnische Vorgänge von der weiteren Kolbenzylindereinheit ausführen.

Zusätzlich wird vorgeschlagen, daß zumindest ein Meßsensor zur Erfassung eines Betriebsparameters vorzusehen ist, der seinerseits in einen Regelkreis zur Ausregelung des Verlagerungsantriebs eingebunden ist.

Zweckmäßigerweise wird dabei der statische Druck in der Druckmittelleitung erfaßt und zur Ausregelung des Verlagerungsantriebs verwendet.

Ergänzend hierzu können auch weitere Meßsensoren vorgesehen sein, die bei der Erfassung weiterer Betriebsparameter, zum Beispiel der abzubremsenden Lasten oder dgl. dienen.

Zweckmäßigerweise ist die Druckfeder so bemessen, daß bei einem Druck in der Druckleitung, der geringer ist als der zum Verlagern der Kolbenzylindereinheit in Richtung zur Bremsfreigabestellung notwendige Druck, die erfindungsgemäße weitere Kolbenzylindereinheit in federnd abgestützter Schwebe gehalten wird, so daß zwischen Kolben und Zylinder der weiteren Kolbenzylindereinheit eine geringfügige Rechts-Linksauslenkung abhängig von den während des Betriebs zwangsläufig auftretenden Schwankungen der Betriebsparameter möglich ist. Dabei sollte die Druckfeder aber im Hinblick auf die geometrischen Abmessungen der weiteren Kolbenzylindereinheit auch so bemessen sein, daß sie unter dem zur Verlagerung der Kolbenzylindereinheit in Richtung zur Bremsfreigabestellung notwendigen Druck so weit zusammenpreßbar ist, daß die erfindungsgemäße weitere Kolbenzylindereinheit dann auf den rückwärtigen Anschlag fährt, das heißt die Druckfeder dann ihre maximale Spannung erreicht.

Dies kann zum Beispiel dadurch geschehen, daß die Druckfeder dann unter Anlage ihrer Windungen zusammengepreßt ist oder dadurch, daß der Kolben der weiteren Kolbenzylindereinheit gegen einen gehäuseseitigen Anschlag des zugehörigen Zylinders fährt.

Die weitere Kolbenzylindereinheit verfügt zweckmäßigerweise lediglich über nur eine Hydraulikseite.

Auf ihrer von der Hydraulikseite abgewandten Seite wird sie mechanisch beaufschlagt.

Hierzu wird vorgeschlagen, einen elektrischen Antrieb zu verwenden, der über eine Verstellspindel auf die weitere Kolbenzylindereinheit wirkt.

Derartige Verstellspindeln sind Bestandteil handelsüblicher Spindel-Servomotoren, die rein elektrisch angesteuert werden und somit eine hohe Reaktionsgeschwindigkeit ermöglichen.

Hierzu wird ergänzend vorgeschlagen, zwischen den jeweils verwendeten Meßsensoren und dem Motorregler entsprechende Wandler zu setzen, die auf ihrer Ausgangsseite ein der jeweils gemessenen Größe des Betriebsparameters entsprechendes elektrisches Signal ausgeben.

Im folgenden wird die Erfindung anhand eines Ausführungsbeispiels näher erläutert. Es zeigt:

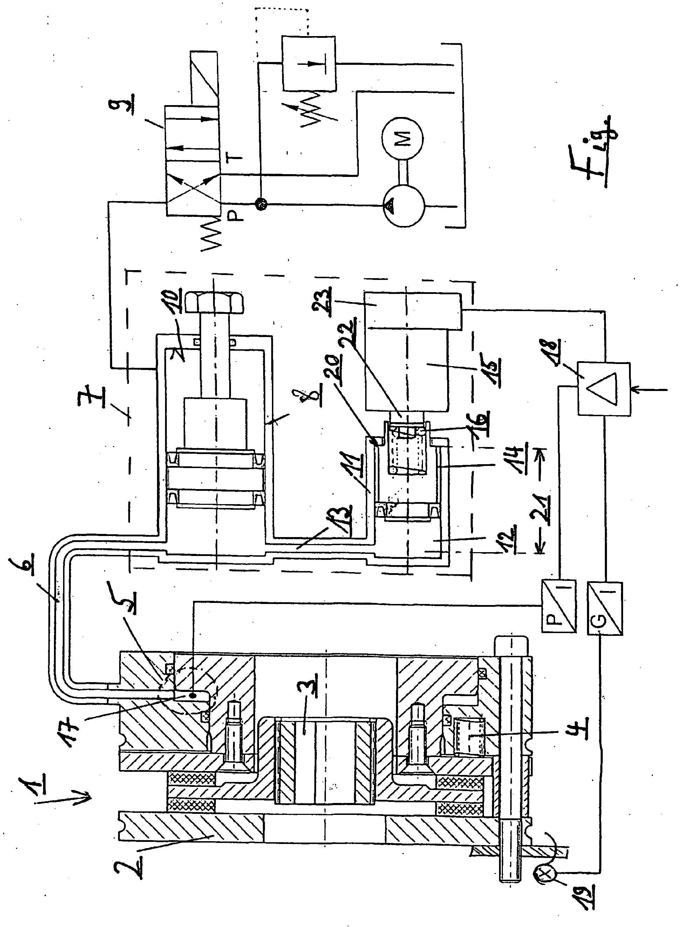

Fig.1 ein erstes Ausführungsbeispiel der Erfindung.

Die Figur zeigt eine Sicherheitsbremse 1.

Derartige Sicherheitsbremse weist einen ortsfesten Bremsstator 2 und einen Bremsrotor 3 auf, der relativ zum Bremsstator drehbar gelagert ist.

Zwischen Bremsrotor und Bremsstator befinden sich die kreuzweise schraffiert gezeichneten Bremsbeläge.

Als Kraftgeber 4 dienen Druckfedern, mit deren Hilfe der axial verlagerbare Bremsstator gegen die Bremsbeläge des Bremsrotors gepreßt wird, um unter dem jeweiligen Lastmoment einen Stillstand des Bremsrotors 3 zu erzielen.

Damit aus der so erreichten Bremssperrstellung wieder die Bremsfreigabestellung erzielt wird, dient eine Kolbenzylindereinheit 5, die über eine Druckmittelleitung 6 mit einem Gebersystem 7 verbunden ist.

Wesentlich ist nun, daß das Gebersystem 7 zwei voneinander getrennte Kolbenzylindereinheiten 8,11 aufweist.

Zusätzlich zu der rein hydraulischen Kolbenzylindereinheit 8, die auf ihrer Nehmer- und auf ihrer Geberseite rein hydraulisch angesteuert ist, ist eine weitere Kolbenzylindereinheit 11 vorgesehen.

Die hydraulisch angesteuerte Kolbenzylindereinheit 8 wird über ein Wegeventil 9 mit einer Druckquelle verbunden oder einem Tank, je nach Stellung des Wegeventils 9.

Befindet sich das Wegeventil 9 in der Entlüftungsstellung, wie gezeigt, kann der Kolben der hydraulisch angesteuerten Kolbenzylindereinheit 8 maximal bis zum rückwärtigen Anschlag 10 verfahren werden, so daß der abgeschlossene Raum der Kolbenzylindereinheit 5, welche für die Verlagerung der Sicherheitsbremse 1 zwischen Bremssperrstellung und Bremsfreigabestellung zuständig ist, mimimal wird, während zugleich die Kraftgeber 4 ihre maximale Ausfahrlänge einnehmen.

Abweichend hiervon weist die weitere Kolbenzylindereinheit 11 lediglich eine einzige Hydraulikseite 12 auf, die parallel zu der Ausgangsseite der hydraulisch angesteuerten Kolbenzylindereinheit 8 ebenfalls an die Druckmittelleitung 6 angeschlossen ist.

Beide Kolbenzylindereinheiten 8,11 liegen daher parallel an der Druckmittelleitung 6, so daß in den Hydraulikräumen der hydraulisch angesteuerten Kolbenzylindereinheit 8 und der weiteren Kolbenzylindereinheit 11 jeweils der übereinstimmende Druck herrscht, der auch in der Druckmittelleitung 6 vorliegt.

Hierzu dient eine kommunizierende Verbindungsleitung 13 zwischen dem Druckraum der hydraulisch angesteuerten Kolbenzylindereinheit 8 und der Druckraum der weiteren Kolbenzylindereinheit 11.

Auf ihrer von der Hydraulikseite 12 abgewandten Seite wird die weitere Kolbenzylindereinheit 11 von einem dauerhaft in unterschiedlichen Lagen positionierbaren Verlagerungsantrieb 15 motorisch beaufschlagt.

Durch die motorische Beaufschlagung der weiteren Kolbenzylindereinheit 11 wird daher zwischen Kolben und Zylinder eine abhängig von der jeweiligen Stellung des Verlagerungsantriebs 15 vorgegebene Relativposition eingestellt und somit ein Vordruck in der Druckmittelleitung 6 erzeugt, welcher im Gleichgewicht mit der jeweiligen Auslenkung der Kraftgeber 4 steht, so lange die Sicherheitsbremse nicht in einer ihrer Endstellungen, Bremsfreigabestellung oder Bremssperrstellung, liegt.

Ergänzend zeigt die Figur, daß zwischen dem Verlagerungsantrieb 15 und der weiteren Kolbenzylindereinheit 11 eine Druckfeder 16 sitzt.

Die Verbindung zwischen Verlagerungsantrieb 15 und dem Kolben der weiteren Kolbenzylindereinheit 11 ist daher unter dem Einfluß der Druckfeder 16 schwebend, solange nicht der Kolben der weiteren Kolbenzylindereinheit 11 durch einen übermäßigen Druckaufbau in der Kolbenzylindereinheit 8 in Richtung zu einem gehäusefesten Anschlag verlagert wird.

Weiterhin zeigt die Figur, daß ein Meßsensor 17 zur Erfassung eines Betriebsparameters vorgesehen ist und daß dieser Meßsensor 17 in einen Regelkreis zur Ausregelung des Verlagerungsantriebs 15 eingebunden ist.

Zu diesem Zweck ist zwischen dem Meßsensor 17 und dem Regler 18, dessen Ausgang auf den motorischen Antrieb des Verlagerungsantriebs 15 wirkt, ein Wandler vorgesehen, der das Ausgangssignal des Meßsensors in ein als Eingangssignal für den motorischen Verlagerungsantrieb 15 geeignetes Signal umwandelt.

Als Meßsensor ist hier ein Drucksensor gezeigt, welcher der Erfassung des statischen Drucks in der Druckmittelleitung 6 dient, wobei dieser statische Druck an allen Stellen innerhalb des kommunizierenden Systems abgegriffen werden kann.

Weiterhin ist angedeutet, daß ein weiterer Meßsensor 19 vorgesehen sein kann, der zur Erfassung eines weiteren Betriebsparameters dient.

Auf diese Weise können außer dem' Druck auch weitere Betriebsparameter zum Beispiel angehängte Lasten oder dgl. in den Regelkreis zur Steuerung des Verlagerungsantriebs eingespeist werden.

Insoweit gilt auch hier, daß über einen Wandler der gemessene Wert in ein Signal umgewandelt werden muß, mit dessen Hilfe der motorische Verlagerungsantrieb 15 unmittelbar angesteuert werden kann.

Dabei ist die Druckfeder 16 so bemessen, daß bei einem Druck in der Druckmittelleitung 6, der geringer als der zur Verlagerung der Kolbenzylindereinheit 5 in Richtung zur Bremsfreigabestellung notwendige Druck ist, die weitere Kolbenzylindereinheit 11 in federnd abgestützer Schwebe mit geringen Losbrechmomenten gehalten wird, während aber die Druckfeder zugleich so ausgelegt sein muß, daß sie unter dem zum Verlagern der Kolbenzylindereinheit 5 in Richtung zur Bremsfreigabestellung notwendigen Druck soweit zusammengepreßt wird, daß die weitere Kolbenzylindereinheit 11 dann auf Anschlag fährt.

Zu diesem Zweck bildet die Rückwand des Zylinders der weiteren Kolbenzylindereinheit 11 einen rückwärtigen Anschlag 20 für den dann zwangsweise nach rechts verlagerten Kolben, so daß für diesen Betriebsfall die Regelung der hydraulischen Größen außer Betracht bleibt.

Alternativ kann hierzu auch die Druckfeder so bemessen sein, daß ihre einzelnen Windungen dann auf Block stehen.

Hierzu zeigt Fig.1, daß der Kolben der weiteren Kolbenzylindereinheit 11 vorzugsweise innerhalb eines bestimmten Bereichs 21 in Schwebeposition gehalten wird, wobei aufgrund der geringeren Baugröße der weiteren Kolbenzylindereinheit 11 im Verhältnis zur Baugröße der hydraulisch angesteuerten Kolbenzylindereinheit 8 die geringeren Losbrechmomente bei kleinen Auslenkungen aus der jeweiligen Position zu erwarten sind, so daß sich insgesamt eine feinfühlige Regelung einstellen dürfte.

Weiter ist gezeigt, daß der Verlagerungsantrieb 15 über einen nicht näher bezeichneten elektrischen Antrieb verfügt, der über eine Verstellspindel 22 auf die weitere Kolbenzylindereinheit 11 wirkt.

Verstellspindel und elektromotorischer Antrieb bilden zusammen eine Baueinheit in Form eines Spindel-Servomotors.

Zur Funktion:

Das System ist mit Hydraulikfluid gefüllt und entlüftet.

Der Kolben der hydraulisch angesteuerten Kolbenzylindereinheit 8 befindet sich in rückwärtiger Position, vorzugsweise in Anschlagposition.

Der Kolben der weiteren Kolbenzylindereinheit 11 ist mit einer kleinen Vorspannkraft der Druckfeder 16 ein gewisses Stück in den Zylinder eingetaucht, diese Eintauchposition ist die NULL-POSITION.

In dieser Stellung befindet sich die Sicherheitsbremse in Bremssperrstellung.

Wird nun das Wegeventil 9 nach links verlagert, gerät über die Druckleitung der Pumpe der rechte Raum der Kolbenzylindereinheit 8 unter Druck und der betreffende Kolben wird nach links verlagert.

Dabei wird ab Überschreiten eines gewissen Drucks die Druckfeder 16 soweit zusammengedrückt, bis diese entweder auf Block steht oder der Kolben der weiteren Kolbenzylindereinheit 11 am Gehäuse auf den rückwärtigen Anschlag 20 läuft.

Sodann wird die Bremse belüftet, das heißt die Bremssperrstellung wird aufgehoben und die Last kann sich weiter bewegen.

Dabei melden die Sensoren 17,19 die aktuellen Sollwerte an den Regler 18, so daß über den Spindel-Servomotor 23 Einfluß auf die Vorspannung der Druckfeder 16 und damit auf das gesamte System genommen wird.

Wird nun das Wegeventil zur Einleitung des Bremsvorgangs wieder in die gezeigte Position verlagert, also in Richtung zur Bremssperrstellung, während zugleich der Steuerraum der Kolbenzylindereinheit 8 in den Tank entleert wird, setzt der Bremsvorgang ein.

Dabei bleibt allerdings die Vorspannung der Druckfeder 16 im wesentlichen erhalten, so daß die von den Kraftgebern 4 auf die Bremsbeläge ausgeübte Kraft vermindert wird von einem Kraftäquivalent, welches sich aus der Vorspannung der Druckfeder 16 ergibt.

Die Bremsung erfolgt daher stets in Abhängigkeit von der Position des Verlagerungsantriebs 15.

Diese Funktion bleibt auch bei einem Netzausfall erhalten, was für den Betrieb der Sicherheitsbremse notwendig ist.

Dabei verharrt der Spindel-Servomotor 23 auch bei Netzausfall in seiner letzten Einstellposition, so daß auch dann die Bremsung mit dem zuletzt sensorisch ermittelten Sollwert erfolgt. Darüber hinaus wird bei jedem Stillstand der Bremse der Spindel-Servomotor 23 erneut kraftabhängig in diejenige Position verfahren, die als die NULL-POSITION bezeichnet wurde sodaß die Kraft-Weg-Kontrolle eine automatische Zustandskontrolle der Sicherheitsbremse ermöglicht.

### Bezugszeichenliste:

- 1: Sicherheitsbremse
- 2: Bremsstator
- 3: Bremsrotor
- 4: Kraftgeber
- 5: Kolbenzylindereinheit
- 6: Druckmittelleitung
- 7: Gebersystem
- 8: hydraulisch angesteuerte Kolbenzylindereinheit
- 9: Wegeventil
- 10: rückwärtiger Anschlag von 8
- 11: weitere Kolbenzylindereinheit
- 12: Hydraulikseite von 11
- 13: Verbindungsleitung von 5,8,11
- 14: der Hydraulikseite 12 abgewandte Seite von 11
- 15: Verlagerungsantrieb
- 16: Druckfeder
- 17: Meßsensor (P)
- 18: Regler
- 19: weiterer Meßsensor (G...)
- 20: rückwärtiger Anschlag von 11
- 21: Bereich der Schwebepositionen
- 22: Verstellspindel
- 23: Spindel-Servomotor

## Patentansprüche

1. Sicherheitsbremse (1) deren durch die Kraft eines Kraftgebers (4) bis zum Erreichen der Bremssperrstellung vorgegebenes Bremsmoment im Falle eines einseztenden Bremsvorgangs zunächst zur vollständigen Vernichtung der kinetischen Energie einer abzubremsenden Last und anschließend zum Halten der Last in der Sperrstellung dient, wobei das vorgegebene Bremsmoment mittels durch Druckbeaufschlagung einer mit einem Druckmittel gefüllten Kolbenzylindereinheit (5) veranlaßter Relativbewegung zwischen Bremsrotor (2) und Bremsstator (3) veränderbar ist, in dem hierzu die Kolbenzylindereinheit (5) über eine Druckmittelleitung (6) mit einem Gebersystem (7) kommunizierend verbunden ist, **dadurch gekennzeichnet, daß** das Gebersystem (7) zusätzlich zu einer hydraulische oder pneumatisch angesteuerten Kolbenzylindereinheit (8) eine weitere Kolbenzylindereinheit (11) aufweist, welche mit ihrer Hydraulikseite oder Pneumatikseite (12) parallel zu der hydraulisch oder pneumatisch angesteuerten Kolbenzylindereinheit (8) ebenfalls an die Druckmittelleitung (6) angeschlossen ist und daß die weitere Kolbenzylindereinheit (11) auf ihrer von der Hydraulikseite oder Pneumatikseite (12) abgewandten Seite von einem dauerhaft in unterschiedlichen Lagen positionierbaren Verlagerungsantrieb (15) motorisch beaufschlagbar ist.

2. Sicherheitsbremse nach Anspruch 1, **dadurch gekennzeichnet, daß** zwischen dem Verlagerungsantrieb (15) und der weiteren Kolbenzylindereinheit (11) eine Druckfeder (16) sitzt.

3. Sicherheitsbremse nach Anspruch 1 oder 2, **dadurch gekennzeichnet, daß** zumindest ein Meßsensor (17,19) zur Erfassung eines Betriebsparameters vorgesehen ist, und daß der Meßsensor (17,19) in einen Regelkreis zur Ausregelung des Verlagerungsantriebs (15) eingebunden ist.

4. Sicherheitsbremse nach Anspruch 3, **dadurch gekennzeichnet, daß** ein Drucksensor (17) zur Erfassung des statischen Drucks in der Druckmittelleitung (6) vorgesehen ist.

5. Sicherheitsbremse nach Anspruch 4, **dadurch gekennzeichnet, daß** zumindest ein weiterer Sensor (19) zur Erfassung eines weiteren Betriebsparameters vorgesehen ist.

6. Sicherheitsbremse nach Anspruch 5, **dadurch gekennzeichnet, daß** der weitere Sensor zur Erfassung des Gewichts- oder Lastmoments der abzubremsenden Last dient.

7. Sicherheitsbremse nach einem der Ansprüche 2 bis 6, **dadurch gekennzeichnet, daß** die Druckfeder (16) so bemessen ist, daß bei einem Druck in der Druckmittelleitung (6), der geringer als der zum Verlagern der Kolbenzylindereinheit (5) in Richtung zur Bremsfreigabestellung notwendige Druck ist, die weitere Kolbenzylindereinheit (11) in federnd abgestützter Schwebe gehalten wird.

8. Sicherheitsbremse nach Anspruch 7, **dadurch gekennzeichnet, daß** die Druckfeder so bemessen ist, daß sie unter dem zum Verlagern der Kolbenzylindereinheit (5) in Richtung zur Bremsfreigabestellung notwendigen Druck soweit zusammenpreßbar ist, daß die weitere Kolbenzylindereinheit (11) dann auf Anschlag (20) fährt.

9. Sicherheitsbremse nach einem der Ansprüche 1 bis 8, **dadurch gekennzeichnet, daß** der Verlagerungsantrieb (15) über einen elektrischen Antrieb verfügt, der über eine Verstellspindel (22) auf die weitere Kolbenzylindereinheit (11) wirkt.

10. Sicherheitsbremse nach Anspruch 9, **dadurch gekennzeichnet, daß** der elektrische Antrieb zusammen mit der Verstellspindel als Baueinheit in Form eines Spindel-Servomotors (23) ausgeführt ist.

## Claims

1. Safety brake (1) whose braking torque, which is predetermined by the force of a force transmitter (4) until the brake locking position is reached, is used during an initiating braking procedure firstly to completely negate the kinetic energy of a load to be braked and then to keep the load in the locking position, wherein the predetermined braking torque can be altered by means of relative movement between the brake rotor (2) and the brake stator (3), which relative movement is caused by pressurising a piston cylinder unit (5) which is filled with a pressurising medium, wherein for this purpose the piston cylinder unit (5) is in communicating connection with a transmitter system (7) via a pressurising medium conduit (6), **characterised in that** the transmitter system (7) comprises, in addition to a hydraulically or pneumatically controlled piston cylinder unit (8), a further piston cylinder unit (11) which is connected by way of its hydraulic side or pneumatic side (12) also to the pressurising medium conduit (6) in parallel with the hydraulically or pneumatically controlled piston cylinder unit (8), and **in that** the further piston cylinder unit (11) can be acted upon in a motorised manner on its side remote from the hydraulic side or pneumatic side (12) by a displacement drive (15) which can be permanently positioned in different locations.

2. Safety brake as claimed in Claim 1, **characterised in that** a pressure spring (16) is located between the displacement drive (15) and the further piston cylinder unit (11).

3. Safety brake as claimed in Claim 1 or 2, **characterised in that** at least one measuring sensor (17, 19) is provided to detect an operating parameter, and **in that** the measuring sensor (17, 19) is integrated in a control circuit for adjusting the displacement drive (15).

4. Safety brake as claimed in Claim 3, **characterised in that** a pressure sensor (17) is provided for detecting the static pressure in the pressurising medium conduit (6).

5. Safety brake as claimed in Claim 4, **characterised in that** at least one further sensor (19) is provided for detecting a further operating parameter.

6. Safety brake as claimed in Claim 5, **characterised in that** the further sensor is used to detect the weight moment or load moment of the load to be braked.

7. Safety brake as claimed in any one of Claims 2 to 6, **characterised in that** the pressure spring (16) is dimensioned such that if the pressure in the pressurising medium conduit (6) is smaller than the pressure required to displace the piston cylinder unit (5) in the direction of the brake release position, the further piston cylinder unit (11) is kept suspended in a resiliently supported manner.

8. Safety brake as claimed in Claim 7, **characterised in that** the pressure spring is dimensioned such that it can be compressed to such an extent below the pressure required to displace the piston cylinder unit (5) in the direction of the brake release position that the further piston cylinder unit (11) then moves against a stop (20).

9. Safety brake as claimed in any one of Claims 1 to 8, **characterised in that** the displacement drive (15) has an electric drive which acts upon the further piston cylinder unit (11) via an adjusting spindle (22).

10. Safety brake as claimed in Claim 9, **characterised in that** the electric drive, together with the adjusting spindle, is designed as a structural unit in the form of a spindle servomotor (23).

## Revendications

1. Frein de sécurité (1) dont le couple de freinage prédéfini par la force d'un générateur de force (4) jusqu'à l'obtention de la position de blocage de frein sert tout d'abord, en cas d'amorce de freinage, à supprimer complètement l'énergie cinétique d'une charge à freiner puis à arrêter la charge dans la position de blocage, le couple de freinage prédéfini pouvant être modifié à l'aide d'un mouvement relatif entre le rotor de frein (2) et le stator de frein (3) qui est provoqué par la pression exercée sur une unité piston-cylindre (5) remplie d'un agent de pression, l'unité piston-cylindre (5) étantt reliée pour cela de manière communicante au système générateur (7) par l'intermédiaire d'une conduite d'agent de pression (6), **caractérisé en ce que** le système générateur (7) comporte en plus d'une unité piston-cylindre (8) à commande hydraulique ou pneumatique une autre unité piston-cylindre (11) qui est raccordée elle aussi, avec son côté hydraulique ou pneumatique (12), à la conduite d'agent de pression (6), parallèlement à l'unité piston-cylindre (8) à commande hydraulique ou pneumatique, et **en ce que** l'autre unité piston-cylindre (11), sur son côté opposé au côté hydraulique ou pneumatique (12), est apte à être contrainte par un moteur grâce à un entraînement de déplacement (15) apte à être positionné de manière durable dans différentes positions.

2. Frein de sécurité selon la revendication 1, **caractérisé en ce qu'**un ressort de compression (16) est placé entre l'entraînement de déplacement (15) et l'autre unité piston-cylindre (11).

3. Frein de sécurité selon la revendication 1 ou 2, **caractérisé en ce qu'**il est prévu au moins un capteur de mesure (17, 19) pour détecter un paramètre de fonctionnement et **en ce que** le capteur de mesure (17, 19) est intégré dans un circuit de régulation pour régler l'entraînement de déplacement (15).

4. Frein de sécurité selon la revendication 3, **caractérisé en ce qu'**il est prévu un capteur de pression (17) pour détecter la pression statique dans la conduite d'agent de pression (6).

5. Frein de sécurité selon la revendication 4, **caractérisé en ce qu'**il est prévu au moins un autre capteur (19) pour détecter un autre paramètre de fonctionnement.

6. Frein de sécurité selon la revendication 5, **caractérisé en ce que** l'autre capteur sert à détecter le couple de poids ou le couple de charge de la charge à freiner.

7. Frein de sécurité selon l'une des revendications 2 à 6, **caractérisé en ce que** le ressort de compression (16) est dimensionné pour que lorsqu'il y a dans la conduite d'agent de pression (6) une pression qui est inférieure à la pression nécessaire pour déplacer l'unité piston-cylindre (5) dans le sens de la position de déblocage de frein, l'autre unité piston-cylindre (11) est maintenue dans une position d'équilibre grâce à un ressort.

8. Frein de sécurité selon la revendication 7, **caractérisé en ce que** le ressort de compression est dimensionné pour pouvoir être comprimé, soumis à la pression nécessaire pour déplacer l'unité piston-cylindre (5) vers la position de déblocage de frein, pour que l'autre unité piston-cylindre (11) arrive alors contre une butée (20).

9. Frein de sécurité selon l'une des revendications 1 à 8, **caractérisé en ce que** l'entraînement de déplacement (15) dispose d'un entraînement électrique qui agit par l'intermédiaire d'une broche de réglage (22) sur l'autre unité piston-cylindre (11).

10. Frein de sécurité selon la revendication 9, **caractérisé en ce que** l'entraînement électrique est conçu comme une unité de construction, avec la broche de réglage, sous la forme d'un servomoteur à broche (23).
